# EUROPEAN PATENT APPLICATION

(11) **EP 3 466 603 A1**
(43) Date of publication of application: **10.04.2019**
(21) Application number: 17805428.4
(22) Date of filing: 02.06.2017
(51) Int. Cl.: B23K 37/00

(54) **STRUCTURAL ARRANGEMENT FOR A COOLING SYSTEM FOR WELDING, PLASMA CUTTING OR LASER MACHINES**

(30) Priority: 03.06.2016 BR 202016012661 U
(71) Applicant: Powermig Automação E Soldagem LTDA, 95032-471 Caxias do Sul (BR)
(72) Inventor: FOCHESATTO, Juarez, 95032-140 Caxias do Sul (BR)
(74) Representative: Pereira Garcia, João Luís
(86) International application number: PCT/BR2017/050139
(87) International publication number: WO 2017/205953

(57) **Abstract**

A constructive arrangement is described for a cooling system of welding, plasma or laser cutting machines comprising a tubular fin assembly (30) interconnected to the heat sink (20) arranged in the inner portion of the welding, plasma or laser cutting machine (10), helping the heat dissipation through the use of the air and gas inlet and outlet of the equipment itself near the fins arranged to the heat sink at an ambient or refrigerated temperature, improving efficiency and increasing equipment life. In addition, the tubular fin assembly can be used as the sole source of refrigeration in the welding, plasma cutting or laser machines. Solving and improving the drawbacks identified in the prior art.

## Description

This utility model describes a constructive arrangement for cooling system of welding, plasma or laser cutting machines. More specifically, it comprises a tubular fin assembly interconnected and arranged in the inner portion of the welding, plasma or laser cutting machine which help the heat dissipation through the entrance of air or gas next to the fins in an ambient or refrigerated temperature, improving the efficiency and increasing the equipment life.

In order to obtain the electric arc, we need an energy source, commonly referred to as a welding, plasma or laser cutting machine, and technically a welding source. These are machines that allow to obtain the electric arc at low voltages (10 to 350 V) and high currents (20 to 1000 A), being used for welding in the processes of Coated Electrodes, MIG/MAG, TIG, Submerged Arc, Plasma and Electroslag.

The welding or cutting machine is powered by the mains, single-phase, two-phase or three-phase, at normal voltages of 110, 220, 380 or 440V. Whatever the power supply, the output voltage at the machine's terminals should be between 10 and 350 V, and the current type can be alternating or direct current.

The simplest welding machines are conceptualized as small transformers or inverters, which reduce the supply voltage for the mentioned voltages, keeping the alternating current. Due to the simplicity of the equipment, they are low cost and applied in welding processes working with alternating current or direct current.

Internal components of welding machines are heated by the passage of electric current during welding while the arc is accessible. On the other hand, when the arc is not operating, for example, during electrode exchange, slag removal or while moving the head from one welding point to another, the equipment may cool down, particularly when it has internal fans. If the internal temperature of the source becomes too high for a certain period of time, it may be damaged by burning of any component or the rupture of the insulation of the transformer or its life may be greatly reduced.

Thus, welding, plasma or laser cutting machines have auxiliary fans and heat sinks, consisting of fins or massif and usually made of aluminum or copper, arranged in the internal portion of the equipment in order to dissipate the heat coming from the process of welding or cutting, in order to guarantee and increase the life of the components.

In this sense, the state of the art presents several patent documents mentioning improvements applied in systems of cooling and dissipation of heat in welding or cutting machines, where we can emphasize the following documents:
Patent document CN203245525 discloses an independent wind channel structure applied to an electric welding machine. The independent wind channel structure is beneficial to accelerate the rate of heat dissipation of heating elements within an electric welding machine. The independent wind channel structure also has a protective effect of electronic devices with dustproof, waterproof property and other properties.
A cooling fan is fixed inside grooves adjacent to a left wind shield and a right wind shield, the heat sink being located between the left and right wind shield, thus forming a structure arranged in an enclosed space.

This document describes a cooling system provided by a fan enabling heat dissipation within the equipment. However, this system presents some drawbacks in the cooling system due to the constructive form which does not present a good efficiency in the heat dissipation. However, the cooling system claimed in this utility model application describes a tubular fin assembly interconnected and arranged in the inner portion of the machine in order to improve the efficiency of heat dissipation, and allowing the use of this system in several models of welding machines due to the possibility of constructive variability of the product.

Thus, the constructive arrangement in a cooling system of welding, plasma or laser cutting machines, object of this utility model, has the purpose of improving the cooling system of welding or cutting machines through a tubular fin assembly interconnected to the heat sink, arranged in the inner portion of the welding, plasma or laser cutting machine, helping the dissipation of the heat through the use of the air or gas inlet of the equipment itself along the fins arranged to the heatsink at an ambient or refrigerated temperature, improving efficiency and increasing the life of equipment. In addition, the tubular fin assembly can be used as the sole source of refrigeration in the welding, plasma cutting or laser machines.

Such characteristics promote greater efficiency in the heat dissipation and increase the life of the equipment, when compared with the products of the prior art.

The utility model is characterized by a constructive arrangement in a cooling system of welding, plasma or laser cutting machines providing a tubular fin assembly interconnected and arranged in the inner portion of the machine.

The utility model is characterized by a constructive arrangement in a cooling system of welding, plasma or laser cutting machines which provides a tubular fin assembly interconnected to the heat sink of welding, plasma or cutting machines.

The utility model is characterized by a constructive arrangement for cooling system of welding, plasma or laser cutting machines providing a system that assists in the heat dissipation through the air or gas contained in the equipment itself near the tubular fins in an ambient or refrigerated temperature.

The utility model is characterized by a constructive arrangement for cooling system of welding, plasma or laser cutting machines providing the use of gas or air used in the process of welding or cutting

The utility model is characterized by a constructive arrangement for cooling system of welding, plasma or laser cutting machines providing a system that allows its use in several models of welding or cutting machines due to the possibility of constructive variability of the product.

The utility model is characterized by a constructive arrangement in cooling system of welding, plasma or laser cutting machines optionally providing the removal of the fan in order to reduce the entry of dust or particles into the equipment, then increasing its life.

The utility model is characterized by a constructive arrangement in a cooling system of welding, plasma or laser cutting machines optionally providing only the use of the tubular fins arranged inside the equipment, so that the heat sink can be removed, and the tubular fin assembly are the single supply of refrigeration.

In order to better describe the technical characteristics of the constructive arrangement in the cooling system of welding, plasma or laser cutting machines, the following figures are presented:

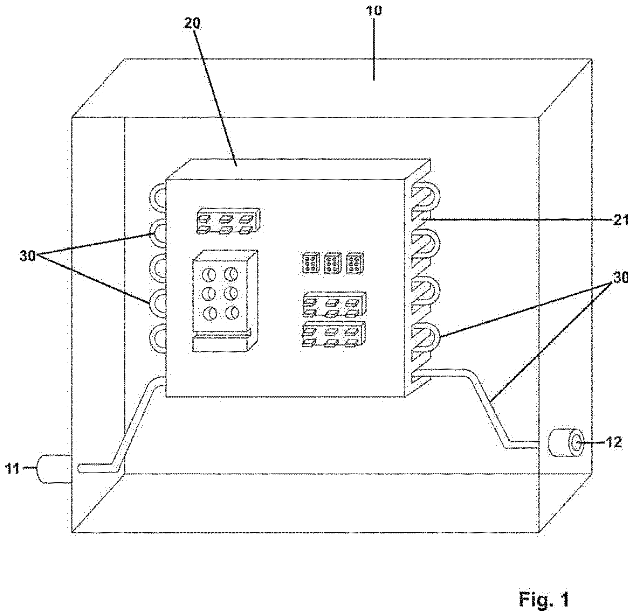

Figure 1 shows the perspective view of the welding, plasma or laser cutting machine, illustrating the heat sink and the set of interconnected tubular fins at the inlet and outlet points.

The constructive arrangement for welding, plasma or laser cutting machines, object of this utility model, comprises a welding, plasma or laser cutting machine (10) internally containing a heat sink (20) which can have fins (21) or massif, and is usually made of aluminum or copper.

The heat sink (20) has a tubular fin assembly (30) disposed between the fins (21) of the heat sink, said tubular fins (30) helping the heat exchange and dissipation, in order to cool down the internal components and improve the working efficiency of welding, plasma or laser cutting machines (10).

The tubular fin assembly (30) is interconnected adjacent to the air or gas inlet (11) and outlet (12) of the equipment, the same air and gas outlet and exhaust point being used in the welding, plasma or laser cutting process. Thus, the same gas or air used in the process passes through the tubular fins (30) before being directed to the cutting or welding torch, so as to help the heat exchange next to the sink 20.

The air or gas entering the equipment (10) through the inlet point (11) has a low temperature and when it passes through the tubular fin assembly (30) disposed between the heat sink (20), it dissipates the heat generated inside the equipment (10) in order to facilitate the cooling of the internal components.

The welding or cutting machines (10) provided by the tubular fin assembly (30) can be used without the auxiliary fans normally contained therein, so as to reduce the entry of dust, oil or particles into internal components, increasing life and reducing constant maintenances.

Optionally, the tubular fin assembly (30) can be used as the single cooling source of the welding, plasma or laser cutting machines (10), allowing the removal of the heat sink and auxiliary fans, so as to enable the construction of smaller equipment.

Accordingly, the constructive arrangement for cooling system of welding,plasma or laser cutting machines, object of this utility model, has the purpose of improving the cooling system of welding or cutting machines (10) through a tubular fin assembly (30) interconnected to the heat sink (20), arranged in the inner portion of the welding, plasma or laser cutting machine (10), helping the heat dissipation through the use of the air or gas inlet (11) and outlet (12) of the equipment itself, together with the tubular fins (30) arranged to the sink (20) at an ambient or refrigerated temperature, improving efficiency and increasing the life of the equipment (10). In addition, the tubular fin assembly (30) can be used as the sole source of cooling for welding, plasma or laser cutting machines (10).

## Claims

1. CONSTRUCTIVE ARRANGEMENT FOR COOLING SYSTEM OF WELDING, PLASMA OR LASER CUTTING MACHINES comprises a welding, plasma or laser cutting machine (10) internally containing a heat sink (20) which can be have fins (21) or massif, **characterized by** the heat sink (20) having a tubular fin assembly (30) arranged between the fins (21) of the heat sink (20), said tubular fins (30) interconnected at the air or gas inlet (11) and outlet (12) of the equipment, and the same air or gas inlet and outlet point in the process of welding, plasma cutting or laser, the air or gas passing through the tubular fin assembly (30) dissipates the heat generated inside the equipment (10).

2. CONSTRUCTIVE ARRANGEMENT FOR COOLING SYSTEM OF WELDING, PLASMA OR LASER CUTTING MACHINES, according to claim 1, **characterized by** the tubular fin assembly (30) enable the removal of auxiliary fans normally contained in such equipment to reduce the entry of dust, oil or particles into the internal components.

3. CONSTRUCTIVE ARRANGEMENT FOR COOLING SYSTEM OF WELDING, PLASMA OR LASER CUTTING MACHINES, according to claim 1, **characterized by**, optionally, the tubular fin assembly (30) being used as the sole cooling supply of welding, plasma or laser cutting machines (10), enabling the removal of the heat sink and auxiliary fans, in order to enable the construction of smaller equipment.
